# DEMANDE DE BREVET EUROPEEN

(11) **EP 1 603 042 A2**
(43) Date de publication de la demande: **07.12.2005**
(21) Numéro de dépôt: 05104815.5
(22) Date de dépôt: 02.06.2005
(51) Int. Cl.: G06F 11/28

(54) **Procédé et système de vérification de l'atomicité de commandes exécutées par un microprocesseur**

(30) Priorité: 02.06.2004 FR 0451087
(71) Demandeur: PROTON WORLD INTERNATIONAL N.V., 1930 ZAVENTEM (BE)
(72) Inventeur: VAN ASSCHE, Gilles, 1030, BRUXELLES (BE)
(74) Mandataire: de Beaumont, Michel

(57) **Abrégé**

L'invention concerne un procédé et un système de vérification du caractère atomique d'au moins une commande exécutée par un microprocesseur (4) d'un élément électronique comprenant au moins une mémoire non volatile réinscriptible (6), consistant à : choisir une commande (31) incluant au moins une mise à jour d'au moins une donnée (DATA) dans la mémoire non volatile ; exécuter plusieurs fois cette commande ; interrompre (24) chaque exécution à un instant (tᵢ) différent de son déroulement ; et vérifier, après chaque interruption, la cohérence de la donnée dans la mémoire non volatile par rapport à au moins un état autorisé prédéterminé.

## Description

La présente invention concerne le domaine des microcontrôleurs embarqués dans des éléments électroniques et, plus particulièrement, la vérification du caractère atomique des commandes ou transactions (suites d'instructions) exécutées par ce microcontrôleur.

Le caractère atomique d'une transaction signifie qu'une ou plusieurs variables mises en oeuvre par cette transaction ne risquent pas d'être fourni avec un état quelconque en cas d'interruption de cette transaction. Le cas le plus simple est une variable ayant un état initial et un état final. L'atomicité d'une transaction mettant en oeuvre cette variable signifie alors que, même en cas d'interruption de la transaction, la variable ne risque pas d'être fournie dans un état intermédiaire.

Un exemple d'application de la présente invention est le domaine des cartes à puce avec ou sans contacts équipés d'un microcontrôleur.

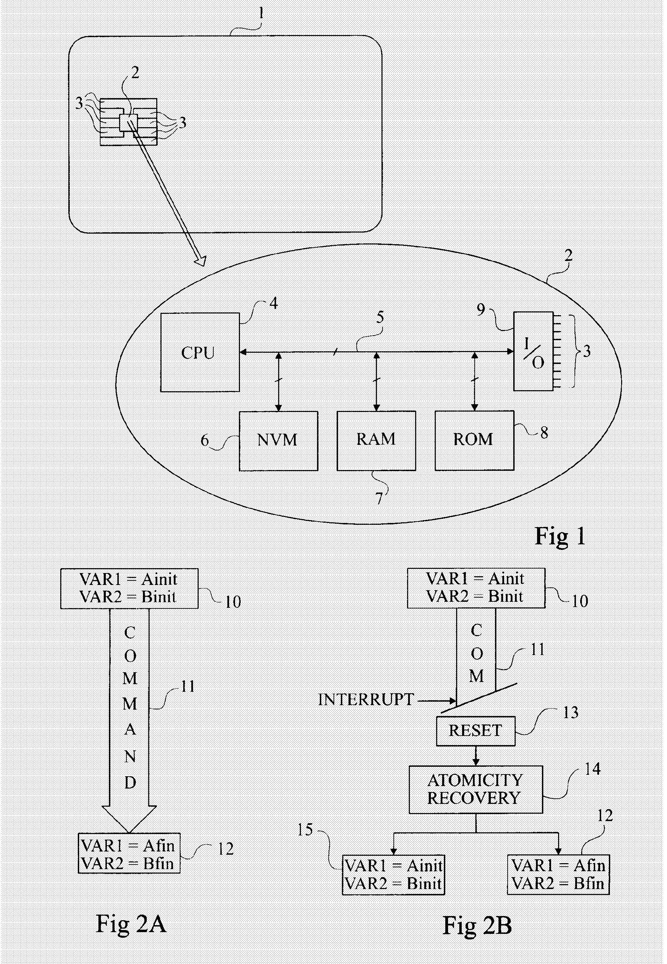

La figure 1 représente, de façon schématique, une carte 1 à puce 2 du type auquel s'applique la présente invention. Dans l'exemple de la figure 1, la carte à puce est une carte à contacts 3. Toutefois, la présence ou l'absence de contact ne modifie en rien l'invention. Dans le cas d'une carte à puce sans contact, les plots métalliques 3 de reprise de contacts sont remplacés ou complétés par une antenne d'un circuit oscillant pour communiquer avec une borne émettant un champ électromagnétique.

Comme l'illustre la figure 1, une puce 2 à microcontrôleur comprend essentiellement une unité centrale de traitement 4 communiquant, par l'intermédiaire d'un ou plusieurs bus 5, avec des mémoires parmi lesquelles, notamment, une mémoire 6 non volatile réinscriptible (NVM), par exemple, du type E²PROM. La puce 2 comporte également une mémoire vive 7 (RAM) pour exécuter les calculs courants et une mémoire morte 8 (ROM) contenant généralement les programmes exécutés par l'unité centrale 4. Enfin, l'unité centrale 4 est également reliée (dans cet exemple par le bus 5) à un circuit 9 d'entrée-sortie (I/O) qui est par ailleurs ici relié aux contacts 3. Dans le cas d'une puce sans contact (transpondeur électromagnétique) le circuit d'entrée-sortie module une porteuse et se trouve donc relié au circuit oscillant formant antenne.

Bien entendu, la carte à puce (plus généralement, l'élément électronique comprenant le microcontrôleur embarqué) peut comprendre d'autres composants et circuits selon les applications.

Les figures 2A et 2B illustrent, de façon très schématique, le caractère atomique d'une commande exécutée par un microcontrôleur. La figure 2A illustre le déroulement de la commande sans interruption. La figure 2B illustre ce déroulement en présence d'une interruption. L'interruption est généralement, dans le cas d'une carte à puce à contacts, une disparition de l'alimentation du microcontrôleur. Plus généralement, il s'agit de n'importe quelle perturbation entraînant un dysfonctionnement du microcontrôleur et provoquant sa réinitialisation.

Dans l'exemple de la figure 2A, on suppose une commande mettant en oeuvre deux variables VAR1 et VAR2 ayant respectivement des états initiaux Ainit et Binit et devant prendre, en fin d'exécution de la commande, des états finaux Afin et Bfin.

Les variables VAR1 et VAR2 sont stockées dans la mémoire non volatile 6. Au début de l'exécution de la commande (bloc 10), les variables VAR1 et VAR2 sont dans leurs états initiaux respectifs Ainit et Binit. En supposant que la commande (bloc 11, COMMAND) s'exécute normalement, la mémoire non volatile contient, en fin d'exécution pour les variables VAR1 et VAR2, leurs états finaux respectifs (bloc 12).

Dans le cas (figure 2B) où une interruption INTERRUPT se produit au cours de l'exécution de la commande 11, par exemple par disparition de l'alimentation de la carte à puce, une procédure spécifique est alors mise en oeuvre.

Cette procédure consiste, lors de la réinitialisation (bloc 13, RESET) suite à la remise sous tension de la carte, en une récupération de l'atomicité (bloc 14, ATOMICITY RECOVERY) de la transaction. Cette procédure conduit dans cet exemple à retrouver, dans la mémoire non volatile, soit les états finaux (bloc 12) des variables, soit leurs états initiaux (bloc 15).

Dans l'exemple ci-dessus, on suppose que, pour la commande considérée, la transaction est considérée comme atomique pourvu que la mise à jour des variables A et B soit effectuée pour les deux variables ou pas du tout. Par conséquent, un état intermédiaire dans lequel une seule des deux variables est mise à jour est considéré comme un état invalide ou non autorisé. On notera que la mise à jour d'une variable ou donnée s'effectue en pratique par une ou plusieurs opérations d'écriture dans la mémoire non volatile.

Des états intermédiaires peuvent le cas échéant être considérés comme cohérents ou autorisés. Par exemple, en supposant une transaction traitant quatre variables A, B, C et D réparties en deux groupes, un respect du caractère atomique de la transaction peut consister en une mise à jour des variables deux à deux. Dans ce cas, quatre situations sont considérées comme logiquement cohérentes : les quatre variables A, B, C et D ont leurs valeurs initiales (aucune mise à jour) ; les quatre variables A, B, C et D ont leurs valeurs finales (mise à jour correcte) ; les variables A et B ont leurs valeurs finales et les variables C et D ont leurs valeurs initiales ; et les variables C et D ont leurs valeurs finales tandis que les variables A et B ont leurs valeurs initiales.

Pour que le caractère atomique de la transaction soit respecté, il faut que les états des variables dans la mémoire non-volatile et leur combinaison correspondent à des états considérés comme logiquement cohérents. Il faut donc qu'en cas d'interruption de la transaction, le processeur soit capable de reconstituer l'un des états ou combinaisons cohérents.

De nombreuses techniques de récupération de l'atomicité de transaction existent. Par exemple, le brevet américain n° 6 535 997 décrit un processeur d'exécution de transactions de données entre un système externe et une carte à puce dans lesquels est mis en oeuvre une procédure de récupération du caractère atomique de la transaction.

Un problème qui se pose est de vérifier l'efficacité de telles procédures de récupération d'atomicité de transactions.

Une technique connue consiste à interrompre l'alimentation de la carte à puce de façon répétitive et à intervalle régulier, et à s'assurer que les états logiquement cohérents soient toujours observés à la remise sous tension.

Un inconvénient d'une telle méthode est que, même en multipliant les opérations de test, elle n'apporte aucune garantie de fiabilité.

De plus, la multiplication des opérations de test entraîne une durée de test souvent rédhibitoire. Cet inconvénient est encore accru par le nombre important de commandes à tester.

La présente invention vise à permettre la vérification du caractère atomique de transactions ou commandes exécutées par un microprocesseur d'un élément électronique, par exemple, une carte à puce. L'invention vise plus particulièrement à vérifier l'efficacité du processus de récupération d'état(s) considéré(s) comme logiquement cohérent(s) que met en oeuvre le microcontrôleur de l'élément électronique.

L'invention vise également à proposer une solution compatible avec les systèmes de gestion de cartes à puce.

L'invention vise également à proposer une solution qui ne nécessite aucune modification des cartes à puce existantes.

L'invention vise également à proposer une solution fiable pour un temps de vérification relativement court par rapport à un examen à intervalles réguliers.

Pour atteindre ces objets ainsi que d'autres, la présente invention prévoit un procédé de vérification du caractère atomique d'au moins une commande exécutée par un microprocesseur d'un élément électronique comprenant au moins une mémoire non volatile réinscriptible, consistant à :
choisir une commande incluant au moins une mise à jour d'au moins une donnée dans la mémoire non volatile ;
exécuter plusieurs fois cette commande ;
interrompre chaque exécution à un instant différent de son déroulement ; et
vérifier, après chaque interruption, la cohérence de la donnée dans la mémoire non volatile par rapport à au moins un état autorisé prédéterminé.

Selon un mode de mise en oeuvre de la présente invention, l'étape de vérification est effectuée à l'issue d'un processus de récupération d'atomicité mis en oeuvre par le microprocesseur.

Selon un mode de mise en oeuvre de la présente invention, les instants successifs d'exécution de ladite commande sont choisis pour être compris entre deux instants précédents ayant conduit à des états autorisés différents, en appliquant un algorithme de dichotomie.

Selon un mode de mise en oeuvre de la présente invention, le choix desdits instants successifs est aléatoire entre lesdits deux instants précédents ayant conduit à des états autorisés différents.

Selon un mode de mise en oeuvre de la présente invention, la vérification est considérée comme ayant échoué dès qu'un état obtenu n'est pas un état autorisé.

Selon un mode de mise en oeuvre de la présente invention, la vérification est considérée comme ayant réussi quand l'instant courant est séparé de l'instant précédent d'un seuil temporel prédéterminé.

Selon un mode de mise en oeuvre de la présente invention, la commande est exécutée une nouvelle fois à un instant différent choisi en fonction d'instants précédents tant que le résultat de la comparaison est correct et que l'intervalle entre deux instants successifs est supérieur à un seuil temporel prédéterminé.

Selon un mode de mise en oeuvre de la présente invention, ledit seuil temporel est fonction de la durée d'une écriture dans la mémoire non volatile.

Selon un mode de mise en oeuvre de la présente invention, après chaque interruption, l'état de la donnée dans la mémoire non volatile est comparé à au moins un état autorisé prédéterminé.

Selon un mode de mise en oeuvre de la présente invention, le procédé est reproduit pour plusieurs commandes différentes choisies pour être représentatives du fonctionnement de l'élément électronique.

Selon un mode de mise en oeuvre de la présente invention, l'élément électronique est une carte à puce.

L'invention prévoit également un système de vérification de l'atomicité d'au moins une commande exécutée par un élément électronique de type carte à puce.

Ces objets, caractéristiques et avantages, ainsi que d'autres de la présente invention seront exposés en détail dans la description suivante de modes de réalisation particuliers faite à titre non limitatif en relation avec les figures jointes parmi lesquelles :
les figures 1, 2A et 2B qui ont été décrites précédemment sont destinées à exposer l'état de la technique et le problème posé ;
la figure 3 représente, de façon très schématique et sous forme de blocs, un mode de mise en oeuvre du procédé de vérification du caractère atomique de commandes exécutées par un microprocesseur selon la présente invention ;
la figure 4 illustre un premier exemple de sélection d'un instant de test selon un mode de mise en oeuvre de l'invention ;
la figure 5 illustre un deuxième exemple de sélection d'un instant de test selon un mode de mise en oeuvre de l'invention ; et
la figure 6 illustre la répartition des instants de test dans l'exécution d'une transaction par la mise en oeuvre de l'invention.

Les mêmes éléments ont été désignés par les mêmes références aux différentes figures. Pour des raisons de clarté, seuls les éléments et étapes qui sont nécessaires à la compréhension de l'invention ont été représentés aux figures et seront décrits par la suite. En particulier, les commandes exécutées par le microcontrôleur n'ont pas été détaillées, l'invention étant compatible avec n'importe quelle commande classique pourvu qu'elle comprenne au moins une instruction de mise à jour d'une donnée en mémoire non-volatile.

Une caractéristique de la présente invention est de sélectionner, dans l'exécution par un microcontrôleur d'une transaction dont on souhaite vérifier l'atomicité, des instants d'interruption choisis pour être particulièrement sensibles.

L'invention tire son origine d'une analyse des étapes ou instructions critiques d'une transaction en terme de respect de son caractère atomique.

L'inventeur a constaté que, dans un microcontrôleur dont on souhaite qu'il respecte un critère d'atomicité des transactions, les étapes critiques sont en fait les instants d'écriture dans la mémoire non volatile. En effet, si l'écriture n'a pas encore eu lieu, la ou les données n'ont pas été mises à jour et les procédures de récupération d'atomicité prendront, a priori sans difficulté, la ou les valeurs initiales des variables. Si par contre, la ou les données ont déjà été mises à jour, ces procédures de récupération d'atomicité prendront, a priori sans difficulté, la ou les valeurs finales. Par contre, les instants critiques sont ceux où le microprocesseur (unité centrale 4, figure 1) écrit dans la mémoire non volatile.

Un avantage qui ressort déjà de cette sélection particulière des instants de test est un gain de temps considérable dans l'exécution du test. En effet, les instants d'écriture en mémoire non volatile ne représentent généralement que quelques pourcents du temps d'exécution de la commande.

Pour simplifier, l'invention sera décrite en relation avec l'écriture d'une donnée, sachant que tout ce qui sera décrit s'applique également à l'écriture de plusieurs données, dont le nombre dépend de la commande exécutée.

Selon la présente invention, le test consiste à exécuter plusieurs fois une même transaction ou commande au sein de laquelle s'effectue au moins une mise à jour d'une donnée dans la mémoire non volatile associée au microprocesseur. A chaque exécution de cette commande, elle est interrompue à un instant différent de son déroulement et on compare l'état de la donnée dans la mémoire non volatile par rapport à des états autorisés (considérés comme logiquement cohérents) prédéterminés. La cohérence des états du point de vue de l'atomicité correspond soit à des valeurs prédéterminées, soit à une cohérence logique (par exemple, qu'il s'agisse bien d'une date, d'une valeur monétaire entière, etc.).

Selon un mode de mise en oeuvre préféré de la présente invention, les instants d'interruption de l'exécution de la commande sont déterminés automatiquement au cours de l'exécution même de la commande, de préférence, par un algorithme de dichotomie. Ainsi, il n'est pas nécessaire de connaître à l'avance le déroulement de la commande testée pour être en mesure de vérifier l'atomicité de cette commande.

Par exemple, dans une carte à puce appliquée à un porte-monnaie électronique, une variable contenue dans un élément de mémoire non volatile est le compteur contenant la balance (solde) du porte monnaie électronique. Dans ce cas, les états cohérents pour la donnée constituée par la valeur du compteur sont les balances avant et après transaction susceptibles d'être prises par le compteur. L'algorithme de dichotomie focalisera alors les instants de test, par exemple, sur les reports de bit à bit en choisissant d'exécuter une commande avec des valeurs de débit adéquates, et plus généralement sur des instants considérés comme critiques pour la mise à jour.

En reprenant l'exemple du porte-monnaie électronique, une autre variable peut être concernée par l'atomicité. Il s'agit d'un numéro de transaction qui doit être mis à jour de manière cohérente avec la balance. Les deux états cohérents sont alors les couples ancien numéro - ancienne balance et nouveau numéro - nouvelle balance.

Un appareil de test utilisable selon l'invention est n'importe quel appareil informatique susceptible d'échanger des informations avec l'élément électronique à tester. Par exemple, il s'agira d'un lecteur de cartes à puce, équipé d'un programme de test particulier.

L'invention sera décrite par la suite avec un exemple d'application aux cartes à puce. On notera toutefois qu'elle s'applique quel que soit l'élément électronique testé pourvu que celui-ci possède une unité centrale de traitement et au moins une mémoire non volatile.

La vérification effectuée par l'invention est, de préférence, réalisée sur une carte à puce test, par exemple, une carte à puce prélevée dans chaque lot de fabrication. Ce test peut également être effectué sur un produit pilote avant toute production en série.

La sélection des commandes utilisées pour la procédure de test dépend de l'application à laquelle est destinée la carte à puce. On cherche à tester des commandes constituant des cas représentatifs du fonctionnement de cette carte. Par exemple, on pourra s'inspirer des commandes ou transactions considérées comme représentatives dans les tests fonctionnels effectués sur les cartes à puce du type considéré. De tels tests sont parfaitement courants et consistent à vérifier le fonctionnement correct des commandes d'une carte à puce.

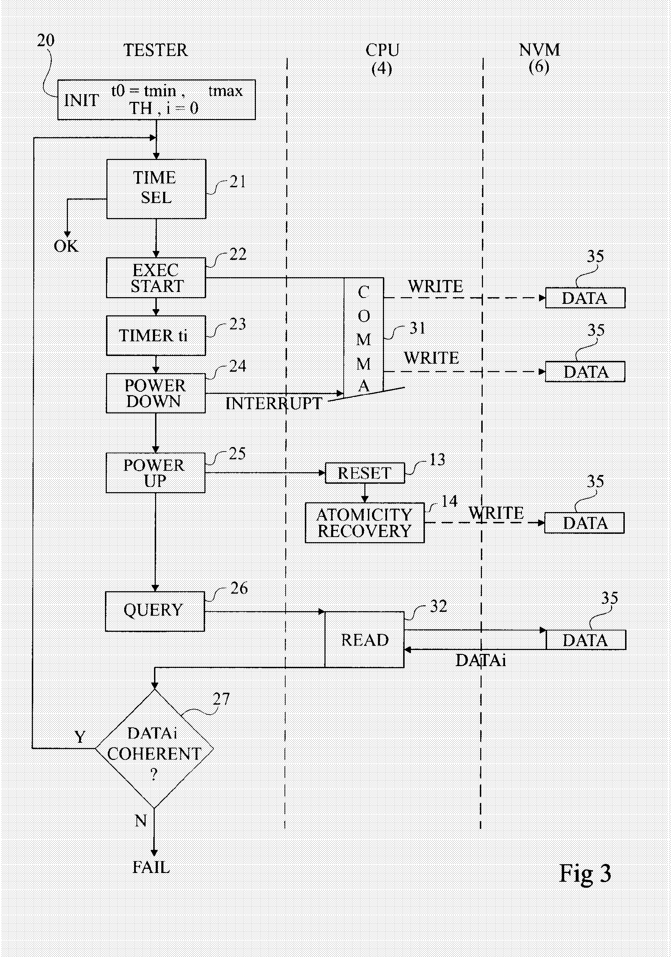

La figure 3 illustre, sous forme de blocs, un mode de mise en oeuvre du procédé de vérification de l'invention. Cette figure illustre les étapes mises en oeuvre dans une application du procédé de l'invention respectivement côté appareil testeur (TESTER), côté unité centrale 4 (CPU) de l'élément électronique (par exemple la carte à puce) et côté mémoire non volatile 6 (NVM).

Selon l'invention, le procédé de test commence par une étape d'initialisation (bloc 20, INIT) au cours de laquelle on fixe, en fonction de la commande à tester, au moins une durée maximale (tmax) d'exécution de la commande ainsi qu'un seuil temporel (TH) constituant le pas minimal temporel entre deux instants de test. De préférence, on fixe également un temps minimum tmin depuis le début de l'exécution de la commande. Ce temps minimum est, par exemple, choisi pour correspondre au seuil TH mais peut également être fixé à zéro.

Le temps maximum attendu est, de préférence, fixé à tmax-TH si la durée exacte de l'exécution de la commande est connue. Dans la négative, on choisira un temps tmax supérieur au temps maximal possible d'exécution de la commande.

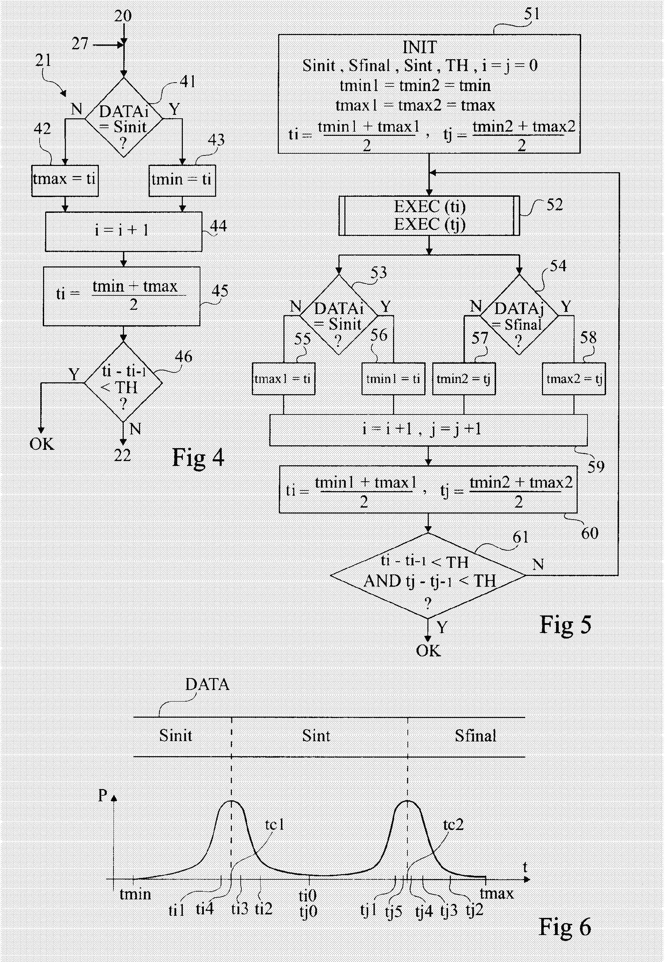

Une fois cette initialisation terminée, le procédé de l'invention sélectionne (bloc 21, TIME SEL) un instant d'interruption dans l'exécution future de la commande. Différents modes de sélection temporelle sont possibles et des exemples seront décrits par la suite en relation avec les figures 4 à 6. Pour l'instant, on se contente de considérer qu'un instant ti d'interruption compris entre tmin et tmax est sélectionné.

Le testeur envoie alors, à destination de la carte à puce (bloc 22, EXEC START), une instruction de début d'exécution de la commande considérée (bloc 31, COMMAND) en même temps qu'il déclenche un compteur temporel (bloc 23, TIMER ti) décomptant le temps jusqu'à l'instant ti. Pendant l'exécution de la commande, des écritures WRITE dans la mémoire NVM (bloc 35, DATA) se produisent à des instants inconnus.

Dès l'instant ti atteint, le testeur déclenche une interruption INTERRUPT de la commande.

Selon un mode de mise en oeuvre préféré, cette interruption consiste en une coupure de l'alimentation (bloc 24, POWER DOWN) de la carte. Cela permet de reproduire très précisément les conditions dans lesquelles sont susceptibles de se produire des interruptions au cours de la vie de la carte.

La carte à puce est ensuite de nouveau alimentée (bloc 25, POWER UP) par le testeur. L'intervalle de temps pendant lequel la carte n'est pas alimentée est choisi pour être suffisant pour nécessiter, côté carte, une procédure de réinitialisation et de récupération d'atomicité. Ainsi, dès que la carte est réalimentée, elle effectue de façon classique une réinitialisation (bloc 13, RESET) et une procédure (bloc 14, ATOMICITY RECOVERY) de récupération de l'atomicité de la commande. Si nécessaire, cette procédure conduit à une écriture (WRITE) partielle ou totale dans la mémoire non volatile NVM d'une donnée (bloc 35, DATA).

Après un intervalle de temps choisi pour laisser le temps à la carte de terminer sa procédure 14, le testeur envoie une requête (bloc 26, QUERY) d'interrogation de la ou des variables dont l'atomicité doit être préservée par l'exécution de la commande. L'intervalle de temps entre les blocs 25 et 26 est, soit fixé par le testeur pour être supérieur à la durée maximale d'une réinitialisation avec récupération d'atomicité côté carte, soit déclenché après que la carte ait envoyé au testeur un signal indicateur d'une fin de procédure de récupération d'atomicité. Suite à la requête 26, la carte (plus précisément son unité centrale 4) exécute une instruction de lecture (bloc 32, READ) de la ou des variables concernées dans la mémoire NVM (bloc 35, DATA). Dans l'exemple de la figure 3, cela consiste en une lecture du bloc 35 qui renvoie une valeur DATAᵢ, l'indice i étant en fait associé à la donnée par le testeur pour la mettre en correspondance avec l'instant ti d'interruption.

Quand le testeur reçoit la donnée DATAᵢ, il vérifie (bloc 27, DATAᵢ COHERENT ?) sa cohérence du point de vue du respect de l'atomicité. Si la donnée DATAᵢ n'est pas cohérente (N), le testeur fournit un indicateur de défaut (FAIL) signifiant que la carte à puce n'est pas capable de récupérer l'atomicité de la commande de façon fiable. Si par contre la donnée DATAᵢ est cohérente, le testeur revient au bloc 21 de sélection d'un autre instant d'interruption et les étapes décrites ci-dessus à partir de l'étape 21 sont réexécutées avec ce nouvel instant.

Lors de la sélection de l'instant d'interruption, le testeur détermine s'il est nécessaire d'effectuer de nouveaux tests ou si des essais en nombre suffisant ont été réalisés. Dans l'affirmative, il arrête le procédé de test et fournit un indicateur OK de la fiabilité.

La détermination de la fin du test est, par exemple, effectuée lorsque des tests en nombre suffisant ont été réalisés au voisinage de l'instant ou des instants d'écriture dans la mémoire volatile. Ces instants sont en pratique inconnus avant le test. Un mode de réalisation simplifié consiste à s'assurer que les instants de test les plus proches des instants d'écriture déterminés sont distants temporellement l'un de l'autre d'une valeur inférieure au seuil TH, ce seuil étant déterminé en fonction de la granularité minimum d'une opération d'écriture par l'unité centrale. Par exemple, le seuil est inférieur à la durée d'une opération d'écriture. En variante, une fois un seuil TH égal à la durée d'une opération d'écriture atteint, on effectue un petit nombre de tests (moins de dix) à l'intérieur de la plage temporelle alors obtenue autour de l'instant d'écriture.

La figure 4 illustre un premier exemple de réalisation simplifié de la sélection des instants tᵢ d'interruption selon l'invention. L'exemple de la figure 4 s'applique au cas où la commande surveillée possède, comme états cohérents, uniquement un état initial Sinit et un état final Sfinal. En pratique, plusieurs phases d'écriture interviendront dans une commande pour laquelle plusieurs états intermédiaires cohérents peuvent être acceptables. Toutefois, la simplification de la figure 4 permet d'illustrer plus clairement l'invention.

Selon cet exemple, l'étape d'initialisation (20, figure 3) initialise un instant t0 correspondant au seuil temporel minimal tmin, et l'indice i comme étant égal à 0.

L'organigramme de la figure 4 correspond aux étapes du bloc 21 de la figure 3. Par conséquent, l'entrée dans l'organigramme de la figure 4 provient soit du bloc 20 d'initialisation soit du test 27 de fin de boucle.

La première étape de la sélection temporelle consiste à comparer (bloc 41, DATAi = Sinit ?) la donnée DATAi lue dans la mémoire à l'état cohérent initial Sinit. Si DATAi = Sinit, alors le seuil tmin est fixé à l'instant pour lequel le test vient d'être effectué (bloc 43, tmin=ti). Sinon, c'est le seuil tmax qui est fixé égal à l'instant ti (bloc 42, tmax=tᵢ).

Puis (bloc 44, i=i+1), l'indice de l'instant d'interruption est incrémenté de 1.

L'instant d'interruption ti pour l'exécution suivante, fourni par le bloc 21, est alors calculé (bloc 45, ti = (tmax + tmin)/2) comme étant le milieu entre les deux seuils. En variante, l'instant ti est sélectionné de façon aléatoire entre les instants tmin et tmax courants. En sortie du bloc 45, on vérifie (bloc 46, tᵢ-tᵢ₋₁ < TH ?) que l'intervalle entre deux instants successifs reste supérieur au seuil TH. Dans l'affirmative (sortie N du bloc 43), on utilise l'instant ti déterminé pour l'exécution suivante de la commande. Par contre, si l'intervalle est inférieur au seuil (sortie Y du bloc 46), cela signifie que le test est terminé pour la commande considérée et qu'aucune perte d'atomicité n'a été constatée.

On notera que le choix de la valeur Sinit ou Sfinal sur laquelle est effectué le test 41 n'a pas d'importance. Il suffit d'inverser les sorties du bloc 41 pour un test sur l'état Sfinal.

On voit que, comme une seule étape d'écriture dans les mémoires intervient dans la commande considérée, l'exécution du test va faire converger, par itérations successives, l'instant d'interruption vers l'instant précis où se produit cette écriture. Il s'agit en fait d'un algorithme simplifié de dichotomie.

La figure 5 représente un autre exemple de sélection d'instants d'interruption dans le cas où un état intermédiaire Sint est considéré comme cohérent dans l'exécution de la commande. L'organigramme de la figure 5 est à rapprocher de ceux des figures 3 et 4 combinés.

Une première étape d'initialisation (bloc 51) consiste à prendre en compte les états initial Sinit, final Sfinal et intermédiaire Sint de la variable (DATA, bloc 35) traitée par la commande 31 (figure 3) dont on souhaite vérifier le caractère atomique. On initialise également un écart temporel minimum TH, deux seuils minimaux tmin1 et tmin2 comme étant égaux au seuil tmin, deux seuils maximaux tmax1 et tmax2 comme étant égaux au seuil tmax, ainsi que deux index i et j comme étant égaux à 1 et deux premiers instants interruptions ti et tj comme étant tout deux égaux à (tmax + tmin)/2.

La définition de ces instants d'interruption revient à prévoir deux instants dans la durée d'exécution de la commande afin d'être en mesure, par un algorithme de dichotomie, de focaliser les interruptions sur les instants de changement d'état Sinit vers Sint et Sint vers Sfinal. Dans l'exemple représenté, cela revient à appliquer l'algorithme de la figure 4 pour chacun des changements d'état.

On exécute ensuite la commande (bloc 52, EXEC(tᵢ) EXEC (tⱼ)) pour les deux instants ti et tj. Cette exécution revient à effectuer deux fois les étapes 22 à 27 de la figure 3 avec les étapes correspondantes côté carte à puce.

Si le test 27 échoue (sortie N) pour l'une ou l'autre des données DATAi et DATAj, on indique un défaut (FAIL) de fiabilité du processus de récupération d'atomicité.

En cas de sortie affirmative du bloc 27, on revient dans l'organigramme de la figure 5. On dispose toutefois de deux valeurs DATAi et DATAj dans la mesure où les étapes 22 et 27 ont été exécutées deux fois respectivement pour les instants d'interruption ti et tj.

On compare alors séparément (blocs 53, DATAi = Sinit ? et bloc 54, DATAj = Sfinal ?) les valeurs DATAi et DATAⱼ respectives par rapport aux états Sinit et Sfinal. Si la donnée DATAi est différente de Sinit, le seuil tmax1 est fixé à ti (bloc 55, tmax1=tᵢ). Sinon (bloc 56, tmin1=tᵢ), le seuil tmin1 est fixé à tᵢ. Côté bloc 54, si la donnée DATAj est différente de Sfinal, le seuil tmin2 est fixé à tj (bloc 57, tmin2=tⱼ). Sinon (bloc 58, tmax2=tj), le seuil tmax2 est fixé à tj. Les étapes ci-dessus réduisent successivement les intervalles de sélection des instants ti et tj afin de faire converger ces instants vers les instants d'écriture dans la mémoire non volatile.

Les indices i et j sont ensuite incrémentés (bloc 59 i = i+1, j = j+1) . Puis (bloc 60, tᵢ=(tmin1 + tmax1)/2 et tⱼ=(tmin2 + tmax2)/2), les instants tᵢ et tⱼ sont choisis au milieu des plages respectives fixées par les seuils. Là encore, les instants peuvent être choisis aléatoirement à l'intérieur des plages.

Les instants ti et tj ainsi définis sont comparés (bloc 61, tᵢ-tᵢ₋₁<TH AND tⱼ-tⱼ₋₁<TH) au seuil TH pour déterminer s'il convient d'exécuter encore une boucle ou si la carte à puce est fiable du point de vue de l'atomicité de la commande considérée.

La figure 6 illustre la sélection des instants décrite en relation avec la figure 5. Cette figure 6 représente l'échelle temporelle d'exécution de la commande par les états successifs pris par la donnée DATA et les différents instants de test. Les instants successifs ont été désignés tᵢ₀, tᵢ₁, tᵢ₂, tᵢ₃, tᵢ₄, et tⱼ₀, t_{j1'} tⱼ₂, tⱼ₃, tⱼ₄, tⱼ₅.

En pratique, le nombre de tests est plus important et on peut considérer une distribution statistique (trait plein en figure 6) focalisant à des instants critiques tc1 et tc2 les interruptions effectuées, de façon à focaliser la vérification sur les instants d'écriture dans la mémoire non volatile correspondant aux changements entre les états Sinit et Sint et entre les états Sint et Sfinal.

Cette distribution statistique des tests effectués correspond à celle d'un algorithme de dichotomie qui ne correspond pas nécessairement à celui de la figure 5. Par exemple, on pourra choisir de mettre en oeuvre un algorithme de dichotomie tel que décrit dans l'ouvrage "The Art of Computer Programming" de Donald E. Knuth, vol. 3, 2^{nd} édition de 1988 par Addison Wesley, pages 409 et suivantes.

Bien que l'invention ait été décrite ci-dessus en relation avec la surveillance d'une seule variable mise à jour par la commande, plusieurs variables peuvent être surveillées, leur nombre dépendant de la commande exécutée.

Un avantage de la présente invention est qu'elle permet de vérifier le caractère atomique d'une commande exécutée par un microprocesseur sans qu'il soit nécessaire de connaître à l'avance les détails d'implémentation de cette commande et notamment ses instants d'écriture dans la mémoire non volatile.

Un autre avantage de l'invention est qu'elle est ainsi compatible avec des cartes à puce existantes ou autre éléments électriques à tester existants.

Un autre avantage de l'invention est qu'elle minimise le nombre d'essais à effectuer pour vérifier l'atomicité des transactions de la carte à puce grâce à la mise en oeuvre de l'algorithme de dichotomie pour sélectionner les instants d'interruption successifs.

Bien entendu, la présente invention est susceptible de diverses variantes et modifications qui apparaîtront à l'homme de l'art. En particulier, la mise en oeuvre pratique de l'invention par des moyens logiciels est à la portée de l'homme du métier à partir des indications fonctionnelles données ci-dessus. De même, la détermination des commandes représentatives pour une application donnée est à la portée de l'homme du métier à partir des indications données ci-dessus et en s'inspirant, par exemple, des commandes considérées comme représentatives dans des tests fonctionnels pour cette application.

## Revendications

1. Procédé de vérification du caractère atomique d'au moins une commande exécutée par un microprocesseur (4) d'un élément électronique (2) comprenant au moins une mémoire non volatile réinscriptible (6), **caractérisé en ce qu'**il consiste à :
choisir une commande (31) incluant au moins une mise à jour d'au moins une donnée (DATA) dans la mémoire non volatile ;
exécuter plusieurs fois cette commande ;
interrompre (24) chaque exécution à un instant (tᵢ) différent de son déroulement ; et
vérifier, après chaque interruption, la cohérence de la donnée dans la mémoire non volatile par rapport à au moins un état autorisé prédéterminé (Sinit, Sfinal).

2. Procédé selon la revendication 1, dans lequel l'étape de vérification est effectuée à l'issue d'un processus de récupération d'atomicité (14) mis en oeuvre par le microprocesseur (4).

3. Procédé selon la revendication 1 ou 2, dans lequel les instants successifs (tᵢ, tⱼ) d'exécution de ladite commande sont choisis pour être compris entre deux instants précédents ayant conduit à des états autorisés différents, en appliquant un algorithme de dichotomie.

4. Procédé selon la revendication 3, dans lequel le choix desdits instants successifs (tᵢ, tⱼ) est aléatoire entre lesdits deux instants précédents ayant conduit à des états autorisés différents.

5. Procédé selon l'une quelconque des revendications 1 à 4, dans lequel la vérification est considérée comme ayant échoué dès qu'un état (DATAi) obtenu n'est pas un état autorisé.

6. Procédé selon l'une quelconque des revendications 1 à 5, dans lequel la vérification est considérée comme ayant réussi quand l'instant courant (tᵢ) est séparé de l'instant précédent d'un seuil temporel prédéterminé (TH).

7. Procédé selon l'une quelconque des revendications 1 à 6, dans lequel la commande est exécutée une nouvelle fois à un instant différent choisi en fonction d'instants précédents tant que le résultat de la comparaison est correct et que l'intervalle entre deux instants successifs est supérieur à un seuil temporel prédéterminé (TH).

8. Procédé selon la revendication 6 ou 7, dans lequel ledit seuil temporel (TH) est fonction de la durée d'une écriture dans la mémoire non volatile.

9. Procédé selon l'une quelconque des revendications 1 à 8, dans lequel, après chaque interruption, l'état de la donnée dans la mémoire non volatile est comparé à au moins un état autorisé prédéterminé.

10. Procédé selon l'une quelconque des revendications 1 à 9, reproduit pour plusieurs commandes différentes choisies pour être représentatives du fonctionnement de l'élément électronique (2).

11. Procédé selon l'une quelconque des revendications 1 à 10, dans lequel l'élément électronique est une carte à puce (1) .

12. Système de vérification de l'atomicité d'au moins une commande exécutée par un élément électronique (1) de type carte à puce, **caractérisé en ce qu'**il comprend les moyens pour mettre en oeuvre le procédé conforme à l'une quelconque des revendications 1 à 11.
